# EUROPÄISCHE PATENTSCHRIFT

(11) **EP 2 507 105 B1**
(45) Veröffentlichungstag und Bekanntmachung des Hinweises auf die Patenterteilung: **27.06.2018**
(21) Anmeldenummer: 10784736.0
(22) Anmeldetag: 12.11.2010
(51) Int. Cl.: B60W 50/06, B60W 50/08, B60W 30/08

(54) **ANTIZIPATIVE REGELUNG DER FAHRZEUGQUERDYNAMIK BEI AUSWEICHMANÖVERN**
ANTICIPATIVE CONTROL OF VEHICLE TRANSVERSE DYNAMICS IN EVASIVE MANEUVERS
RÉGLAGE ANTICIPATIF DE LA DYNAMIQUE TRANSVERSALE DE VÉHICULE EN CAS DE MAN UVRES D'ÉVITEMENT

(30) Priorität: 01.12.2009 DE 102009047360
(43) Veröffentlichungstag der Anmeldung: 10.10.2012
(73) Patentinhaber: Robert Bosch GmbH, 70442 Stuttgart (DE)
(72) Erfinder: FLEHMIG, Folko, Stuttgart 70192 (DE)
(86) Internationale Anmeldenummer: PCT/EP2010/067399
(87) Internationale Veröffentlichungsnummer: WO 2011/067092

(56) Entgegenhaltungen:
- EP-A1- 1 403 157
- EP-A2- 1 992 538
- DE-A1- 19 827 117
- DE-A1- 19 831 249
- DE-A1-102007 044 988

## Beschreibung

### Stand der Technik

Die Erfindung betrifft ein Verfahren zum Beeinflussen der Fahrzeugquerdynamik eines Fahrzeugs gemäß dem Oberbegriff des Patentanspruchs 1.

Bekannte Fahrdynamikregler sorgen dafür, dass Ausweich- oder Spurwechselmanöver eines Kraftfahrzeugs stabil und sicher durchgeführt werden können. In kritischen Situationen, in denen das Fahrzeug beispielsweise über- oder untersteuert, werden einzelne Räder abgebremst, das Motormoment reduziert oder andere Komponenten, wie z.B. eine aktive Vorderachslenkung oder ein aktives Fahrwerk, angesteuert, um das Fahrzeug zu stabilisieren.

Aus den gattungsbildenden Druckschriften EP 1 403 157 A1, DE 198 31 249 A1 und DE 198 27 117 A1 sind Fahrdynamikregler bekannt, die in Abhängigkeit des Betriebszustands eines Fahrzeugs Einfluss auf die Querbeschleunigung ausüben. Bekannt sind aus den genannten Druckschriften beispielsweise Regelungen, die durch ein Stellsignal an einer Kupplung oder einem Differential, oder durch Verteilung der Antriebsmomente auf die Antriebsräder vorgenommen werden. Ebenfalls bekannt ist aus der Druckschrift EP 1 992 538 A2 eine Vorrichtung, mit welcher mittels einer Vorfeldsensorik Hindernisse im Vorfeld eines Fahrzeugs geortet werden und bei akuter Kollisionsgefahr in die Längsführung des Fahrzeugs eingegriffen wird. Die Druckschrift D5 (EP 10 2007 044 988 A1) beschreibt ein Verfahren zur Beeinflussung der Bewegung eines Fahrzeugs, demzufolge der Fahrzustand überwacht wird und bei Detektion einer bevorstehenden Unfallsituation das Antriebsmoment an den Rädern aktiv verteilt wird zur Erzeugung eines Giermoments.

Bekannte Fahrdynamikregler regeln üblicherweise die Gierrate und/oder den Schwimmwinkel eines Fahrzeugs und greifen in den Fahrbetrieb ein, wenn die Regelgröße einen bestimmten Schwellenwert überschreitet. Die Schwellenwerte sind i. d. R. so gewählt, dass für alle möglichen Fahrsituationen ein geeigneter Kompromiss zwischen hoher Fahrsicherheit (durch frühzeitige Regeleingriffe) und hohem Komfort (durch Vermeidung von unpassenden oder zu frühen Regeleingriffen) erzielt wird. Bekannte Fahrdynamikregler greifen daher in einigen Fahrsituationen verhältnismäßig früh ein und in anderen Fahrsituationen verhältnismäßig spät. Dies kann jedoch in manchen Fahrsituationen problematisch sein, z. B. wenn das Fahrzeug einem Hindernis ausweichen muss und der Fahrer erst spät lenkt. Ein früher Reglereingriff bewirkt in diesem Fall, dass die vom Fahrer gewünschte Ausweich-Lenkbewegung gehemmt wird und das Fahrzeug nicht genügend schnell in Querrichtung beschleunigen kann, um dem Hindernis auszuweichen. Wenn der Fahrer
dagegen sehr frühzeitig und stark lenkt, kann das Fahrzeug am Ende des Ausweichmanövers ins Schlingern geraten.

### Offenbarung der Erfindung

Es ist daher die Aufgabe der vorliegenden Erfindung, die Eingriffe eines Fahrzeugregelsystems für eine Situation zu optimieren, in der ein Fahrzeug einem Hindernis ausweicht.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, die Fahrzeugumgebung in Bezug auf die Existenz eines Hindernis zu überwachen, die Gefahr einer Kollision mit dem Hindernis durch Beurteilung wenigstens einer Messgröße abzuschätzen, und das Regelverhalten des Fahrdynamikreglers in Abhängigkeit von der Gefahrensituation einzustellen. Der Fahrdynamikregler kann somit je nach Gefahrensituation kleinere oder größere Schwimmwinkel oder Gierraten und damit eine schnellere oder weniger schnelle Bewegung des Fahrzeugs quer zur Fahrbahn zulassen. In eher kritischen Situationen, in denen sich das Fahrzeug einem Hindernis schnell annähert, können z. B. größere Schwellenwerte für den Schwimmwinkel oder die Gierrate eingestellt werden als in einem Standardmodus des Reglers, um somit eine größere Beschleunigung des Fahrzeugs quer zur Fahrbahn zuzulassen. In weniger kritischen Situationen, in denen sich das Fahrzeug einem weiter weg befindlichen Hindernis mit geringerer Geschwindigkeit annähert, kann der Fahrdynamikregler dagegen so eingestellt werden, dass er früher eingreift als im Standardmodus, um somit eine höhere Stabilität des Fahrzeugs und damit eine größere Fahrsicherheit zu gewährleisten. In diesem Fall ist eine langsamere Seitwärtsbewegung des Fahrzeugs ausreichend, um dem Hindernis auszuweichen.

Eine Anpassung des Regelverhaltens des Fahrzeugreglers erfolgt bei einem Ausweichmanöver. Bei einem normalen Fahrspurwechsel oder einer Kurvenfahrt soll der Regler dagegen in einem Standardmodus betrieben werden. Ausweichmanöver können mit Hilfe einer Umfeldsensorik und ggf. weiteren Sensoren wie z.B. einem Lenkwinkelsensor erkannt werden. Die Umfeldsensorik, wie z. B. ein optischer oder Radarsensor, erkennt in diesem Fall ein Hindernis, die Entfernung zum Hindernis und die Annährungsgeschwindigkeit; aus dem Signal des Lenkwinkelsensors lässt sich ermitteln, mit welcher Geschwindigkeit oder Beschleunigung das Lenkrad betätigt wird. Sehr hohe Lenkgeschwindigkeiten oder -Beschleunigungen in Verbindung mit einem nahen Hindernis und/oder einer hohen Annäherungsgeschwindigkeit sind dabei ein Hinweis für ein Ausweichmanöver.
Gemäß einer bevorzugten Ausführungsform der Erfindung werden zur Einschätzung der Gefahrensituation eine oder mehrere der folgenden Größen gemessen und bei der Einstellung des Regelverhaltens berücksichtigt: die Entfernung zum Hindernis, die Geschwindigkeit des eigenen Fahrzeugs, die Geschwindigkeit des Hindernisses, die Relativgeschwindigkeit von Fahrzeug und Hindernis und/oder die Zeitdauer bis zu einer zu erwartenden Kollision. Entfernung und Geschwindigkeiten können mit Hilfe einer bekannter Sensorik leicht gemessen und daraus die Zeitdauer bis zu einer möglichen Kollision abgeleitetet werden.

In einer kritischen Situation wird der Regler erfindungsgemäss so eingestellt, dass größere Schwimmwinkel und/oder Gierraten möglich sind als in einem Standardmodus. Dadurch kann sich das Fahrzeug schneller in Querrichtung zur Fahrbahn bewegen und dem Hindernis besser ausweichen. In einer weniger kritischen Situation wird dagegen vorzugsweise ein Schwellenwert eingestellt, der kleiner ist als in einem Standardmodus. Das Fahrzeug wird dadurch früher stabilisiert.
Ebenso kann auch die Intensität eines Stelleingriffs je nach Gefahrensituation variiert werden. In eher kritischen Situationen kann ein Bremseneingriff, der dem Gierverhalten des Fahrzeugs entgegen wirkt, schwächer sein als in einem Standardmodus, oder vollständig unterbleiben. Dadurch wird die Gierbewegung des Fahrzeugs in kritischen Situationen nicht oder weniger stark gehemmt, und das Fahrzeug kann sich schneller zur Seite hin bewegen und dem Hindernis ausweichen. In weniger kritischen Fahrsituationen ist der Stelleingriff dagegen vorzugsweise stärker als in einem Standardmodus. Das Fahrzeug wird dadurch schneller stabilisiert.

Gemäß einer speziellen Ausführungsform der Erfindung wird eine anfängliche Ausweich-Lenkbewegung des Fahrers in kritischen Fahrsituationen unterstützt. In kritischen Situationen kann der Regler die Radbremsen z. B. so ansteuern, dass durch den Bremseneingriff ein Giermoment um die Hochachse des Fahrzeugs erzeugt wird, der die Lenkbewegung des Fahrers unterstützt. Ebenso könnte die Bremskraft an einem kurvenäußeren Rad reduziert oder wenigstens ein kurvenäußeres Rad beschleunigt werden, um die Ausweich-Lenkbewegung des Fahrers zu unterstützen. Alternativ könnte auch ein Lenksteller automatisch in die Lenkung eingreifen. In weniger kritischen Situationen können die Stelleingriffe zur Lenkunterstützung entfallen, oder es kann ein Lenkmoment am Lenkrad eingeprägt werden, das einer zu starken Lenkbewegung des Fahrers entgegen wirkt.

Das Reglerverhalten kann grundsätzlich durch Änderung eines Regler-Parameters, eines Schwellenwerts oder einer Regler-Sollgröße an die jeweilige Gefahrensituation angepasst werden.

Die Erfindung wird nachstehend anhand der beigefügten Zeichnungen beispielhaft näher erläutert. Es zeigen:
Fig. 1a den typischen Verlauf eines Ausweichmanövers bei geringer Distanz zu einem Hindernis und hoher Relativgeschwindigkeit;
Fig. 1b den typischen Verlauf eines Ausweichmanövers bei großer Distanz zu einem Hindernis H und kleiner Relativgeschwindigkeit;
Fig. 2 ein Blockdiagramm eines Fahrdynamikregelungssystems.

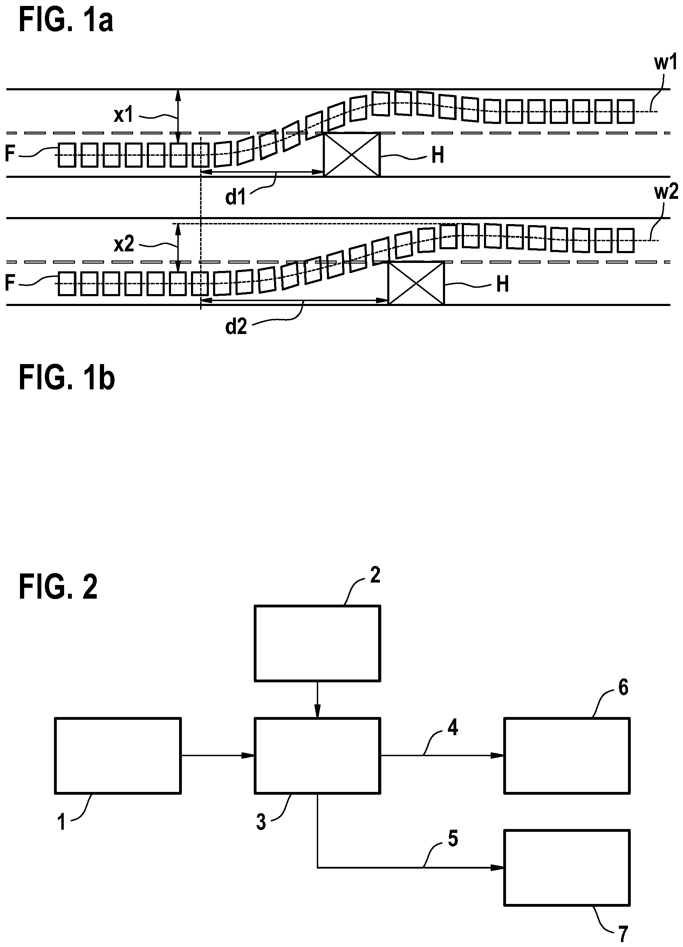

Fig. 1a und 1b zeigen zwei typische Fälle eines Ausweichmanövers, bei dem sich ein Fahrzeug F einem Hindernis H nähert und diesem ausweicht. Die Bewegungsbahn des Fahrzeugs F ist dabei mit w1 bzw. w2 bezeichnet. Zur Vereinfachung wird angenommen, dass das Hindernis H ruht.

In beiden Fällen lenkt der Fahrer das Fahrzeug F zunächst nach links aus (Ausweich-Lenkbewegung) und steuert das Fahrzeug, etwa auf der Höhe des Hindernisses H, dann in die Gegenrichtung (Gegenlenkbewegung), um nicht von der Fahrbahn 1 abzukommen. Das Fahrzeug F kommt nach dem Gegenlenken ins Schlingern, fängt sich wieder, und fährt schließlich geradeaus weiter.

Da im Fall von Fig. 1a die Distanz d1 zwischen Fahrzeug F und Hindernis H relativ klein ist, muss das Fahrzeug stark in Querrichtung beschleunigen, um dem Hindernis H ausweichen zu können. Dies ist aber nur möglich, wenn das Fahrzeug F mit hoher Gierrate eingelenkt wird und der Fahrdynamikregler die Gierbewegung des Fahrzeugs nicht hemmt. Das Regelverhalten des Fahrdynamikreglers wird daher in der Ausweich-Lenkphase so eingestellt, dass die Gierbewegung des Fahrzeugs F nur gering oder gar nicht gehemmt wird. Darüber hinaus ist vorgesehen, die Ausweich-Lenkbewegung des Fahrers aktiv zu unterstützen, z. B. durch Aufbringen eines zusätzlichen Lenkmoments oder Ausführen eines automatischen Bremseneingriffs, der die Gierbewegung des Fahrzeugs F unterstützt. Während des Manövers bewegt sich das Fahrzeug F um eine Strecke x1 zu Seite hin. Auch während der Gegenlenkphase ist der Regler so eingestellt, dass größere Gier- oder Schwimmwinkel zulässig sind als in einem Standardmodus. Dadurch kann zwar das Heck des Fahrzeugs F stärker ausbrechen; dieser Nachteil ist aber gegenüber einer Kollision mit dem Hindernis H vorzuziehen.

In Fig. 1b ist die Distanz d2 zwischen Fahrzeug F und Hindernis H zu Beginn des Ausweichmanövers deutlich größer als in Fig. 1a. Der Fahrer hat mehr Zeit, um dem Hindernis H seitlich auszuweichen. Die Beschleunigung des Fahrzeugs F in Querrichtung kann also geringer sein. Das Regelverhalten des Fahrdynamikreglers wird daher auf mehr Stabilität eingestellt. Der Regler greift somit bereits während der Ausweich-Lenkbewegung, z. B. durch Bremseneingriffe, in den Fahrbetrieb ein und wirkt einer Gierbewegung des Fahrzeugs F entgegen. Gegebenenfalls wird ein Lenkmoment am Lenkrad eingeprägt, das der Lenkbewegung des Fahrers entgegen wirkt. Das Fahrzeug F bewegt sich daher stabiler als im Fall von Fig. 1a. In der Gegenlenkphase wird das Fahrzeug F ebenfalls durch entsprechende Einstellung des Reglers früher und stärker stabilisiert. Insgesamt bewegt sich das Fahrzeug F eine Strecke x2 zur Seite hin. Diese Strecke ist ausreichend, um dem Hindernis H auszuweichen. Fig. 2 zeigt ein vereinfachtes Blockschaltbild eines entsprechenden Fahrdynamikregelungssystems. Der eigentliche Regler ist in einem Steuergerät 3 als Software hinterlegt.

Das System enthält eine Sensorik 1 zum Erkennen eines Ausweichmanövers. Diese umfasst einen oder mehrere Sensoren zur Erkennung eines Hindernisses H, wie z. B. einen optischen Sensor oder einen Radarsensor. Ferner ist ein Lenkwinkelsensor oder ein anderer Sensor vorgesehen, mit dem eine Lenkbewegung messbar ist. Ein im Steuergerät enthaltener Algorithmus wertet die Sensorsignale aus und beurteilt, ob ein Ausweichmanöver vorliegt oder nicht.

Das System umfasst außerdem eine Sensorik 2, mit der eine oder mehrere Größen, wie z. B. die Geschwindigkeit des eigenen Fahrzeugs F und des Hindernisses H, eine Relativgeschwindigkeit, und/oder die Zeitdauer, die das Fahrzeug F bis zum Erreichen des Hindernisses H benötigt, gemessen werden. Aus den Signalen der Sensorik 2 kann die Gefahr einer Kollision qualitativ abgeschätzt werden. Das Regelverhalten des Reglers wird dann in Abhängigkeit von der Gefahrensituation eingestellt.

Die aktuelle Gefahrensituation kann z. B. in unterschiedliche Klassen eingeteilt und das Regelverhalten des Reglers stufenweise eingestellt werden. Im dargestellten Ausführungsbeispiel wird zwischen zwei Gefahrenstufen (kritisch und weniger kritisch) unterschieden und eine entsprechende Regelstrategie 4 oder 5 gewählt. Die Regelstrategie 4 bezieht sich dabei auf eine kritische Situation, in der sich das Fahrzeug F mit hoher Relativgeschwindigkeit einem Hindernis H annähert, das in kurzer Distanz d1 vor dem Fahrzeug F ist (entsprechend Fig. 1a) und die Regelstrategie 5 auf eine weniger kritische Situation, in der sich das Fahrzeug F mit niedriger Relativgeschwindigkeit dem Hindernis H nähert, das sich in größerer Distanz d2 vor dem Fahrzeug F befindet (entsprechend Fig. 1b). Die gewählte Regelstrategie 4 oder 5 wird dann mit entsprechenden Stelleingriffen 6 bzw. 7, wie sie vorstehend beschrieben wurden, umgesetzt.

Wahlweise kann natürlich auch zwischen mehr als zwei Gefahrenstufen unterschieden werden und dementsprechend mehr als zwei Regelstrategien eingestellt werden.

## Patentansprüche

1. Verfahren zur Beeinflussung der Querdynamik eines Fahrzeugs (F) bei einem Ausweichmanöver mit Hilfe eines Fahrzeugreglers (3), der den Schwimmwinkel und/oder die Gierrate des Fahrzeugs (F) regelt und bei Überschreiten eines vorgegebenen Schwellenwertes einen automatischen Stelleingriff auslöst, mit folgenden Schritten
- Überwachen der Fahrzeugumgebung in Bezug auf ein in Fahrtrichtung des Fahrzeugs (F) möglicherweise vorhandenes Hindernis (H),
- Abschätzen der Gefahr einer Kollision mit dem Hindernis (H), **gekennzeichnet durch**
- Einstellen eines bestimmten Regelverhaltens des Reglers (3) in Abhängigkeit von der Gefahrensituation, wobei in einer kritischen Fahrsituation andere Schwellenwerte, Verstärkungsfaktoren und/oder Parameter des Reglers (3) als in einem Standardmodus eingestellt werden,
- wobei ein Schwellenwert, Verstärkungsfaktor oder anderer Parameter des Reglers so eingestellt wird, dass der Regler (3) in einer kritischen Fahrsituation größere Schwimmwinkel und/oder Gierraten zulässt als in einem Standardmodus.

2. Verfahren nach Anspruch 1, **dadurch gekennzeichnet, dass** zur Einschätzung der Gefahrensituation die Entfernung zum Hindernis (H), die Geschwindigkeit des eigenen Fahrzeugs (F) und des Hindernisses (H), eine Relativgeschwindigkeit, und/oder die Zeitdauer, die das Fahrzeug (F) bis zum Erreichen des Hindernisses (H) benötigt, ermittelt werden, und das Regelverhalten des Reglers basierend auf einer oder mehreren dieser Größen eingestellt wird.

3. Verfahren nach Anspruch 1 oder 2, **dadurch gekennzeichnet, dass** ein Schwellenwert, Verstärkungsfaktor oder anderer Parameter des Reglers so eingestellt wird, dass der Regler (3) in einer weniger kritischen Fahrsituation früher eingreift als in einem Standardmodus.

4. Verfahren nach einem der vorhergehenden Ansprüche, **dadurch gekennzeichnet, dass** die Intensität eines Stelleingriffs, der einer Gierbewegung des Fahrzeugs (F) entgegen wirkt, in einer kritischen Fahrsituation schwächer ist als in einem Standardmodus, oder kein solcher Stelleingriff ausgeführt wird.

5. Verfahren nach einem der vorhergehenden Ansprüche, **dadurch gekennzeichnet, dass** die Intensität eines Stelleingriffs, der einer Gierbewegung des Fahrzeugs entgegen wirkt, in einer weniger kritischen Fahrsituation stärker ist als in einem Standardmodus.

6. Verfahren nach einem der vorhergehenden Ansprüche, **dadurch gekennzeichnet, dass** der Regler (3) eine Ausweich-Lenkbewegung des Fahrers in einer kritischen Fahrsituation unterstützt.

7. Verfahren nach einem der vorhergehenden Ansprüche, **dadurch gekennzeichnet, dass** eine Regler-Sollgröße, wie z. B. ein Solldruck, ein Solldruckgradient, ein Lenkwinkel oder ein Lenkwinkelgradient in Abhängigkeit von der Gefahrensituation ermittelt wird.

8. Verfahren nach einem der vorhergehenden Ansprüche, **dadurch gekennzeichnet, dass** mit Hilfe einer Sensorik (1) ein Ausweichmanöver erkannt, und nur bei positiver Erkennung eines Ausweichmanövers das Regelverhalten des Reglers (3) abhängig von der Gefahrensituation angepasst wird.

9. Steuergerät, umfassend einen Regler zum Beeinflussen der Querdynamik eines Fahrzeugs (F), sowie Mittel zum Durchführen eines der vorstehend beanspruchten Verfahren.

## Claims

1. Method for influencing the transverse dynamics of a vehicle (F) during an avoidance manoeuvre using a vehicle controller (3) which controls the side slip angle and/or the yaw rate of the vehicle (F), and triggers an automatic actuating intervention when a predefined threshold value is exceeded, having the following steps:
- monitoring the surroundings of a vehicle with respect to an obstacle (H) which is possibly present in the direction of travel of the vehicle (F),
- estimating the risk of a collision with the obstacle (H),
**characterized by**
- setting a specific control behaviour of the controller (3) as a function of the hazardous situation, wherein other threshold values, gain factors and/or parameters of the controller (3) are set in a critical driving situation than in the standard mode,
- wherein a threshold value, gain factor or other parameter of the controller is set in such a way that in a critical driving situation the controller (3) permits larger side slip angles and/or yaw rates than in a standard mode.

2. Method according to Claim 1, **characterized in that** in order to estimate the hazardous situation the distance from the obstacle (H), the speed of the vehicle (F) in question and of the obstacle (H), a relative speed and/or the time period which the vehicle (F) requires to reach the obstacle (H) are determined, and the control behaviour of the controller is set on the basis of one or more of these variables.

3. Method according to Claim 1 or 2, **characterized in that** a threshold value, gain factor or other parameter of the controller is set in such a way that in a less critical driving situation the controller (3) intervenes earlier than in a standard mode.

4. Method according to one of the preceding claims, **characterized in that** the intensity of an actuating intervention which counteracts a yawing movement of the vehicle (F) is weaker in a critical driving situation than in a standard mode, or no such actuating intervention is carried out.

5. Method according to one of the preceding claims, **characterized in that** the intensity of an actuating intervention which counteracts a yawing movement of the vehicle is stronger in a less critical driving situation than in a standard mode.

6. Method according to one of the preceding claims, **characterized in that** the controller (3) assists an avoidance steering movement of the vehicle in a critical driving situation.

7. Method according to one of the preceding claims, **characterized in that** a controller target variable, such as a target pressure, a target pressure gradient, a steering angle or a steering angle gradient, is determined as a function of the hazardous situation.

8. Method according to one of the preceding claims, **characterized in that** an avoidance manoeuvre is detected using a sensor system (1), and the control behaviour of the controller (3) is adapted as a function of the hazardous situation only when an avoidance manoeuvre is positively detected.

9. Control unit comprising a controller for influencing the transverse dynamics of a vehicle (F), and a means for carrying out one of the methods claimed above.

## Revendications

1. Procédé pour influencer la dynamique transversale d'un véhicule (F) dans le cas d'une manoeuvre d'évitement à l'aide d'un régulateur de véhicule (3), qui régule l'angle de flottement et/ou le taux de lacet du véhicule (F) et déclenche une intervention de réglage automatique en cas de dépassement d'une valeur seuil prédéterminée, comprenant les étapes suivantes :
- la surveillance de l'environnement du véhicule par rapport à un obstacle (H) éventuellement présent dans le sens de déplacement du véhicule (F),
- l'estimation du risque de collision avec l'obstacle (H), **caractérisé par**
- le réglage d'un comportement de régulation déterminé du régulateur (3) en fonction de la situation de danger, dans lequel, dans une situation de conduite critique, d'autres valeurs seuils, facteurs de gain et/ou paramètres du régulateur (3) que dans un mode standard sont réglés,
- dans lequel une valeur seuil, un facteur de gain ou un autre paramètre du régulateur est réglé de telle manière que le régulateur (3) autorise des angles de flottement et/ou des taux de lacet plus élevés dans une situation de conduite critique que dans un mode standard.

2. Procédé selon la revendication 1, **caractérisé en ce que**, pour évaluer la situation de danger, la distance par rapport à l'obstacle (H), la vitesse du véhicule lui-même (F) et de l'obstacle (H), une vitesse relative et/ou le temps que met le véhicule (F) pour atteindre l'obstacle (H) sont déterminés et **en ce que** le comportement de régulation du régulateur est réglé sur la base d'une ou de plusieurs de ces grandeurs.

3. Procédé selon la revendication 1 ou 2, **caractérisé en ce qu'**une valeur seuil, un facteur de gain ou un autre paramètre du régulateur est réglé de telle manière que le régulateur (3) intervienne plus tôt dans une situation de conduite moins critique que dans un mode standard.

4. Procédé selon l'une des revendications précédentes, **caractérisé en ce que** l'intensité d'une intervention de réglage qui contrebalance un mouvement de lacet du véhicule (F) est plus faible dans une situation de conduite critique que dans un mode standard, ou **en ce qu'**aucune intervention de réglage n'est effectuée.

5. Procédé selon l'une des revendications précédentes, **caractérisé en ce que** l'intensité d'une intervention de réglage qui contrebalance un mouvement de lacet du véhicule est plus élevée dans une situation de conduite moins critique que dans un mode de conduite standard.

6. Procédé selon l'une des revendications précédentes, **caractérisé en ce que** le régulateur (3) assiste un mouvement de direction d'évitement du conducteur dans une situation de conduite critique.

7. Procédé selon l'une des revendications précédentes, **caractérisé en ce qu'**une grandeur de consigne du régulateur, comme par exemple une pression de consigne, un gradient de pression de consigne, un angle de braquage ou un gradient d'angle de braquage, est déterminée en fonction de la situation de danger.

8. Procédé selon l'une des revendications précédentes, **caractérisé en ce qu'**une manoeuvre d'évitement est détectée à l'aide de capteurs (1) et **en ce que** le comportement de régulation du régulateur (3) n'est adapté en fonction de la situation de danger que lors de la détection positive d'une manoeuvre d'évitement.

9. Dispositif de commande comprenant un régulateur destiné à influencer la dynamique transversale d'un véhicule (F) et des moyens destinés à mettre en oeuvre l'un des procédés précités.
